# EUROPÄISCHE PATENTSCHRIFT

(11) **EP 3 928 673 B1**
(45) Veröffentlichungstag und Bekanntmachung des Hinweises auf die Patenterteilung: **15.05.2024**
(21) Anmeldenummer: 20182694.8
(22) Anmeldetag: 26.06.2020
(51) Int. Cl.: A47L 15/42, D06F 39/00, F16M 7/00, B62B 5/00, B62B 5/04, D06F 39/12, F24C 15/08, F25D 23/00

(54) **GLIED MIT EINER AUSFAHRBAREN BREMSE EINER TRANSPORTVORRICHTUNG UND EINE TRANSPORTVORRICHTUNG FÜR WASCHMASCHINEN UND ANDERE HAUSGERÄTE**
MEMBER WITH AN EXTENSIBLE BRAKE OF A TRANSPORT DEVICE AND A TRANSPORT DEVICE FOR WASHING MACHINES AND OTHER HOUSEHOLD APPLIANCES
ÉLÉMENT DOTÉ D'UN FREIN EXTENSIBLE D'UN DISPOSITIF DE TRANSPORT ET DISPOSITIF DE TRANSPORT POUR MACHINES À LAVER ET AUTRES APPAREILS ÉLECTROMÉNAGERS

(43) Veröffentlichungstag der Anmeldung: 29.12.2021
(73) Patentinhaber: Kappatos, Theofilos, 13671 Acharnai Attikis (GR)
(72) Erfinder: Kappatos, Theofilos, 13671 Acharnai Attikis (GR)
(74) Vertreter: Sakellarides, Vasiliki-Vali

(56) Entgegenhaltungen:
- EP-A1- 0 047 210
- EP-A1- 2 508 114
- GB-A- 2 576 638
- KR-B1- 101 897 556
- US-A- 4 192 564

## Beschreibung

### Technisches Gebiet

Die vorliegende Erfindung betrifft ein Glied mit einer ausfahrbaren Bremse für eine Transportvorrichtung von Waschmaschinen und Hausgeräten oder anderen schweren Objekten und betrifft auch eine Transportvorrichtung für Waschmaschinen und Haushaltsgeräte oder andere schwere Objekte, die aus zwei solchen Gliedern besteht und billig, handhabbar, leicht unter einer Waschmaschine bzw. Hausgerät installierbar ist, um die Waschmaschine bzw. Haushaltsgerät, z.B. Küchenmöbel, Kühlschrank, oder Schrank, Kiste o.ä. zu versetzen.

### Hintergrund der Erfindung

Stützbasen oder Transportvorrichtungen von Haushaltsgeräten, Waschmaschinen usw. nach dem Stand der Technik haben einen rechteckigen Rahmen, dessen Dimensionen anpassbar an die Dimensionen des zu transportierten Objektes sind, soweit bzw. solange das Objekt nicht auf der Stützbasis liegt. Außerdem haben die herkömmlichen Transportvorrichtungen Rollen, die auf der unteren Seite der Stützbasis an den vier Ecken angeordnet sind. Diese herkömmlichen Transportvorrichtungen, die aus Blech gefertigt sind, werden durch die Immobilisierung der vorderen, linker und rechter Rolle mit Bremsbelägen und einem Exzentermechanismus immobilisiert. Unter anderem beschreibt GB 2 576 638 A ein in Längsrichtung verstellbares Glied einer Transportvorrichtung mit Rolleneinrichtungen am vorderen und hinteren Ende, dessen Rollen im Stand auf dem Boden aufliegen und durch Bremsen festgehalten werden können. Die aus dem Stand der Technik bekannten Stützbasen, insbesondere Waschmaschinenstützbasen haben allerdings die nachfolgenden Nachteile:
i. Sie haben alle die Form eines Rahmens, der das Gerät tragen kann und aus einem Metall erzeugt ist. Ansonsten, falls das Gerät eine Waschmaschine ist, könnte der Rahmen im Betrieb sich verschieben (durch das Rütteln des Gerätes im Betrieb), mit dem Risiko, dass die Waschmaschine herunterrutscht oder die Stützbasis beschädigt wird.
ii. Es ist möglich, dass die Waschmaschine auf der Stützbasis nicht richtig platziert ist, so dass im Betrieb der Rahmen sich verbiegt oder die Waschmaschine sich vom Rahmen herunter bewegt.
iii. Falls das Objekt nicht richtig auf der Stützbasis platziert wird, können sich die Seiten der Basis nach unten verbiegen, mit dem Risiko, dass die Transportvorrichtung unbrauchbar wird und/oder der Boden, auf dem die Transportvorrichtung liegt, beschädigt wird, wobei die Basis so gebremst wird, dass diese mit dem Gerät nicht mehr versetzt werden kann.
iv. Die Seiten des rechteckigen Rahmens haben keine hohe Festigkeit, denn ihr einziger Fixierungspunkt ist eine Schraube, die in die Mitte der Seiten eingeführt ist und den männlichen mit dem weiblichen Abschnitt jeder Seite verbindet.
v. Falls der Bediener vorab nicht richtig die Länge jeder Seite der Stützbasis einstellt, um ihre Dimensionen exakt zu der Länge und Breite der Basis des Gerätes oder eines anderes Objekts, das auf der Stützbasis liegt, anzupassen, muss der Bediener das Gerät oder Objekt von den Stützbasis herunterbringen und die Länge der Seiten durch Repositionierung der Schraube auf jeder Seite und Fixierung der Schraube einstellen, wobei diese Tätigkeit mühsam ist und mehrere Personen verlangt.
vi. Für die Fixierung der herkömmlichen Stützbasis müssen zwei Bremsbeläge mit einem Exzentermechanismus verwendet werden, um die Rollen zu immobilisieren. Dies hat den Nachteil, dass die Rollen auf dem Boden liegen und bei der Versetzung einer sich im Betrieb befindenden (laufenden) Waschmaschine, auch diese versetzt werden mit verschiedenen Konsequenzen, die auch das Stürzen der Waschmaschine von der Stützbasis umfassen.

Die vorliegende Erfindung hat eine Aufgabe, die obengenannten technischen Probleme zu lösen und ein Glied einer Transportvorrichtung für Waschmaschinen und andere Hausgeräte bzw. eine Vorrichtung bestehend aus zwei solchen Gliedern zu schaffen, wobei die Vorrichtung besonders brauchbar und leicht installierbar unter einer Waschmaschine, einem anderen Haushaltsgerät oder anderen zu transportierendem Objekt von einem einzigen Bediener ist, und die Waschmaschine, bzw. Gerät oder Objekt an der Immobilisierungsstelle fixiert, so dass die obengenannten Nachteile vermieden werden können.

Außerdem ist es eine Aufgabe der vorliegenden Erfindung, eine Transportvorrichtung für eine Waschmaschine, ein anderes Haushaltsgerät oder ein anderes zu transportierendes Objekt zu schaffen, die rechts und links, von der vorderen Seite der Waschmaschine aus gesehen, leicht anpassbar an die Waschmaschine ist, und die Waschmaschine vollständig auf der Vorrichtung wegen ihrer Aussparungen fixiert wird, wobei die erfindungsgemäße Vorrichtung eine Bremseinrichtung für die Transportbasis aufweist, die sowohl in ihrer Bedienung als auch in ihrer Fixierung oder Auslösung leicht handhabbar und beständig und stabil ist, unabhängig von dem Gewicht der Waschmaschine bzw. Geräts, das die Trasportvorrichtung trägt.

Diese Aufgaben werden durch die in den Ansprüchen gekennzeichneten und nachfolgend beschriebenen Ausführungsformen gelöst.

### Kurzbeschreibung der Erfindung

Zur Lösung der Aufgabe stellt die vorliegende Erfindung ein Glied einer Transportvorrichtung zur Verfügung, insbesondere wie in Anspruch 1 gekennzeichnet; ferner wird eine Transportvorrichtung zur Verfügung gestellt, wie in Anspruch 11 dargelegt. Desweiteren offenbart die vorliegende Erfindung eine Verwendung von mindestens zwei der erfindungsgemäßen Glieder oder der Transportvorrichtung zum Transport von Transportgütern, dargelegt in Anspruch und ein Verfahren zum Transport von Transportgütern, dargelegt in Anspruch 14.

Ebenso wird eine Vorrichtung umfassend mindestens 2 der erfindungsgemäßen Glieder, oder eine Transportvorrichtung offenbart, oder mit Aufnahmebereichen für mindestens zwei der erfindungsgemäßen Glieder oder mit Aufnahmebereichen für die Transportvorrichtung ausgestattet, wobei die Aufnahmebereiche so ausgelegt sind, dass sie eine feste Verbindung mit den Gliedern oder der Transportvorrichtung ermöglichen offenbart, dargelegt in Anspruch 15.

### Beschreibung der Figuren

Um die Erfindung für den Fachmann verständlich zu machen, sind bevorzugte Ausführungen der Erfindung nachfolgend exemplarisch beschrieben, in Kombination mit beigefügten Figuren. Die Figuren zeigen eine bevorzugte Ausführung, wobei das Hausgerät eine herkömmliche Waschmaschine ist. Es zeigen:

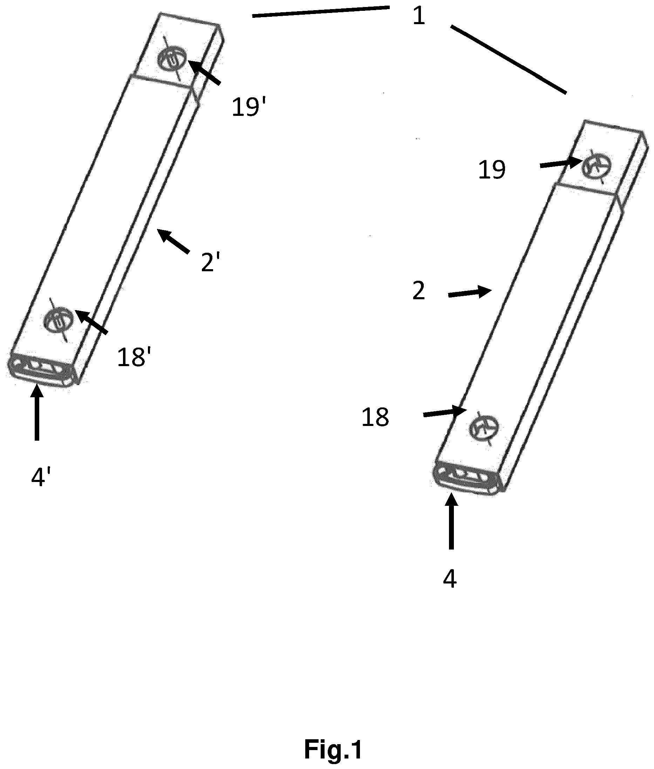

- **Figur 1:**: zeigt in perspektivischer Ansicht, schräg von vorne und oben, die Transportvorrichtung (1) für eine Waschmaschine, die erfindungsgemäß aus zwei gleichen ausfahrbaren Gliedern (2, 2') besteht, bevor die Waschmaschine auf die Vorrichtung (1) platziert wird. Die beiden Glieder (2, 2') sind mit den geschlossenen Seiten des annähernd U-förmigen Profils der Gleitschienen aus denen sie gebildet werden nach oben gezeigt, wobei die Aufnahmebereiche (18, 18', 19, 19') für ein Transportgut, z. B. eine Waschmaschine zu sehen sind.

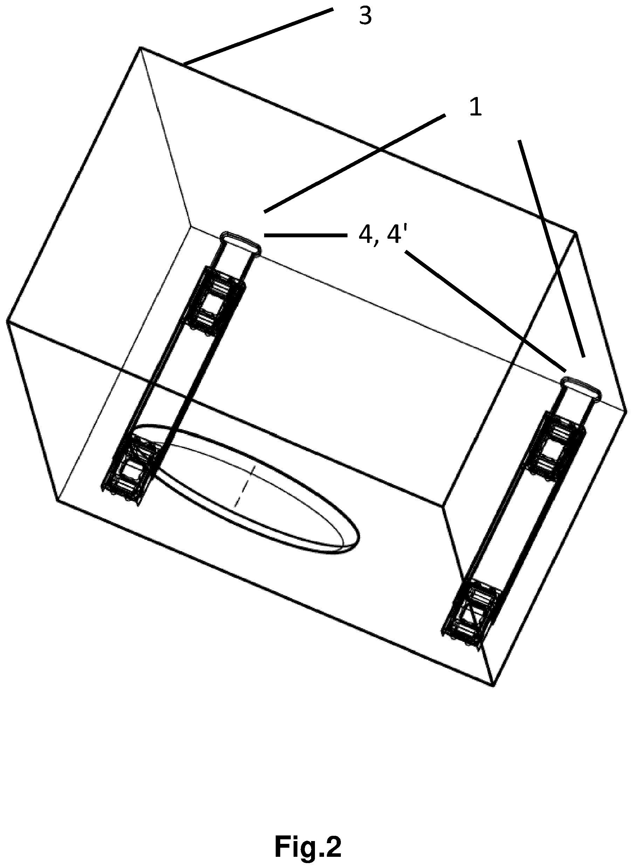

- **Figur 2:**: zeigt in perspektivischer Ansicht, schräg von vorne und oben, die Transportvorrichtung (1) für eine Waschmaschine, die erfindungsgemäß aus zwei gleichen ausfahrbaren Gliedern (2, 2') besteht, wenn die Waschmaschine (3) auf der Vorrichtung (1) platziert ist. In der Abbildung zeigen die annähernd U-förmigen Griffelemente (4, 4') der Transportvorrichtung (1) nach hinten bezogen auf die Waschmaschine. Üblicherweise würde die Transportvorrichtung (1) mit den Griffelementen 4, 4') nach vorne angebracht werden, damit die Griffelemente 4, 4') nach Transport der Waschmaschine (3) in die Glieder eingeschoben und diese so immobilisiert werden können.

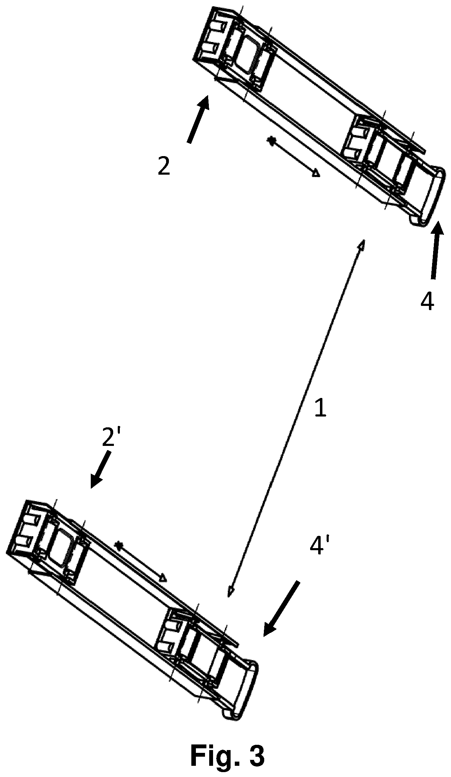

- **Figur 3:**: zeigt in perspektivischer Ansicht, schräg von vorne und unten, die Seite der Transportvorrichtung (1), die auf den Boden liegt, wobei die Vorrichtung aus zwei gleichen ausfahrbaren Gliedern (2, 2') besteht, die mit ihren Längsseiten parallel nebeneinander angeordnet die Transportvorrichtung (1) ergeben.

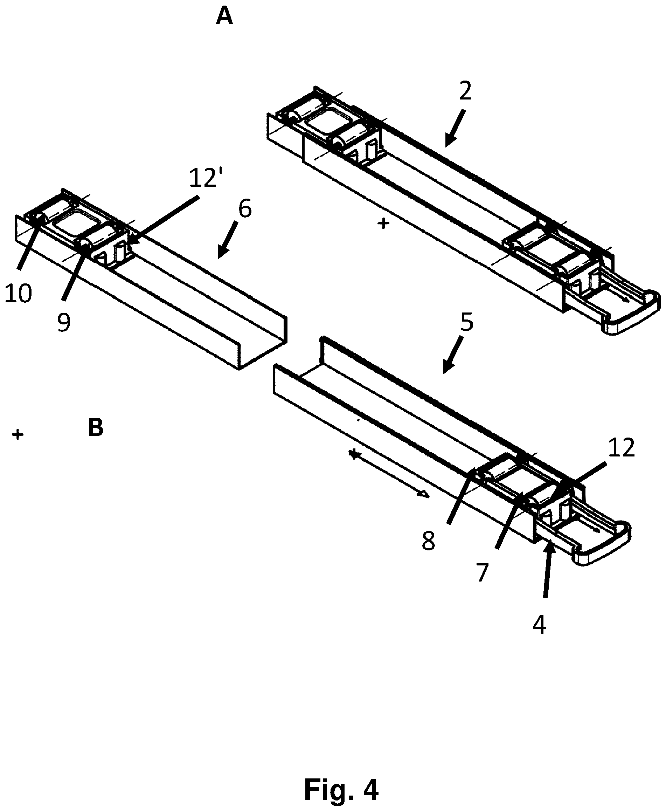

- **Figur 4:**: zeigt in perspektivischer Ansicht die untere Seite eines Glieds (2, 2') der erfindungsgemäßen Transportvorrichtung (1) in Explosionsdarstellung, wobei die zwei Abschnitte bzw. Gleitleisten (5, 6) jedes Glieds (2, 2') ineinander fahrbar sind um das Glied (2', 2') zu erzeugen. **A** - Gleitleisten ineinander eingefahren, **B** - Gleitleisten getrennt, vordere Gleitleiste (5) zeigt das annähernd U-förmige Element (4) und eine Rolleneinrichtung (12) mit zwei Rollen (7, 8) auf, die hintere Gleitleiste (6) trägt kein Griffelement sondern nur die hintere Rolleneinrichtung (12') mit zwei Rollen (9, 10).

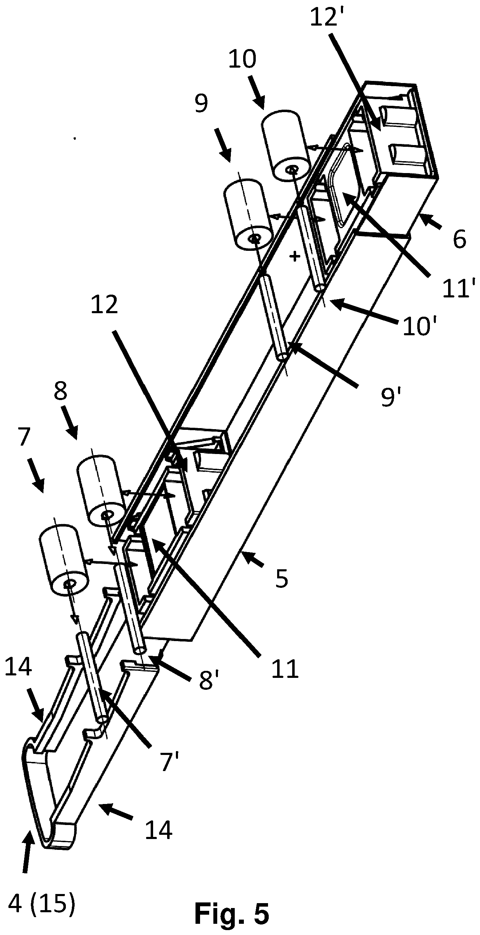

- **Figur 5:**: zeigt in perspektivischer Ansicht von unten das Glied der erfindungsgemäßen Transportvorrichtung (1) für eine Waschmaschine, in Explosionsdarstellung mit den Rollen (7, 8, 9, 10) und den korrespondierenden Stiften (7', 8', 9', 10') die die Rollen (7, 8, 9, 10) der beiden Abschnitten des Glieds (2) tragen und mit dem Griff (4) mit den Griffarmen (14) und den (Sperr-)Erhebungen (13, 13') auch in Explosionsdarstellung,

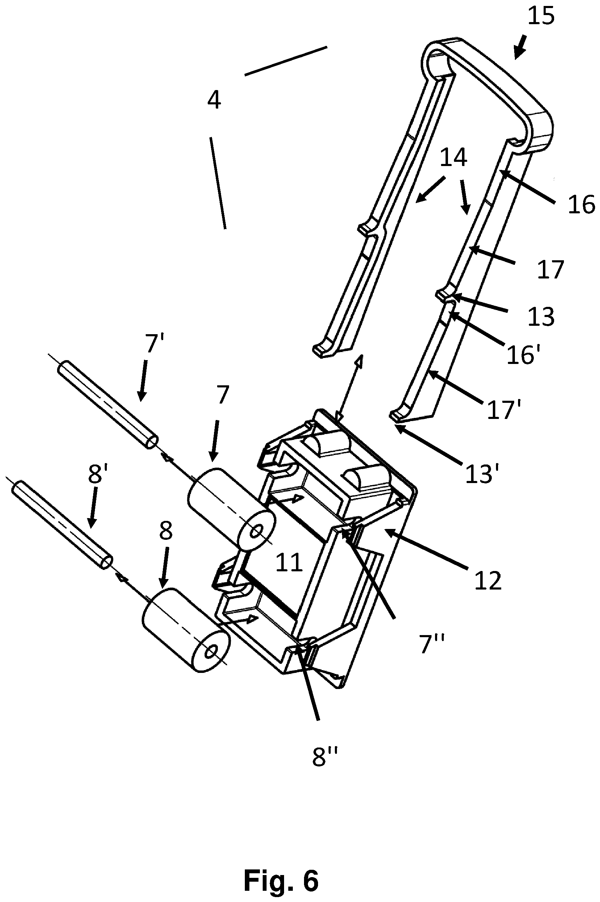

- **Figur 6:**: zeigt in perspektivischer Ansicht von unten ein Detail des vorderen Bremsabschnitts des Glieds (2) der erfindungsgemäßen Vorrichtung (1) für eine Waschmaschine in Explosionsdarstellung mit der Rollen (7, 8) und den korrespondierenden Stiften (7', 8'), die die Rollen (7, 8) des vorderen Bremsabschnitts des Glieds tragen. Ebenso angezeigt die Aufnahmebereiche für die Stifte (7", 8") in der vorderen Rolleneinrichtung (12).

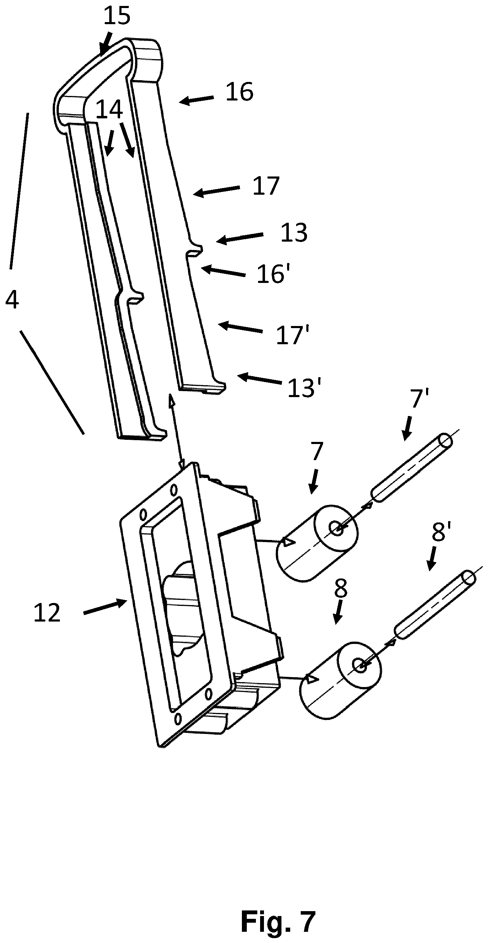

- **Figur 7:**: wie Figur 6 ein Detail des vorderen Bremsabschnitts des Glieds (2) der erfindungsgemäßen Transportvorrichtung (1) jedoch in perspektivischer Ansicht und in Explosionsdarstellung von oben.

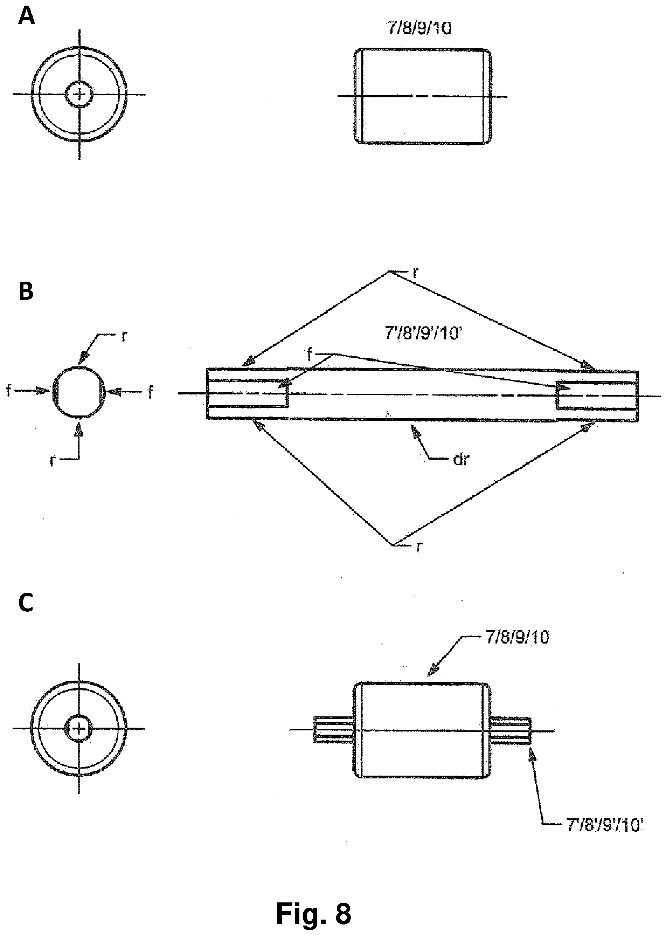

- **Figur 8**:: Alternative Gestaltung des Stiftes (7', 8', 9', 10') mit flachen/abgeflachten Enden jeweils links in Querschnitt und rechts in seitlicher Ansicht. **A** - Rolle (7, 8, 9, 10) **B** - Stift (7', 8', 9', 10') mit flachen Enden; f - abgeflachter Bereich, r - runder Bereich, dr - durchgehend runder Bereich in der Stiftmitte. **C** - Stift (7', 8', 9', 10') innerhalb der Rolle (7, 8, 9, 10).

### Ausführliche Darstellung der Erfindung:

Soweit nachfolgend der Kontext nicht eindeutig etwas anderes ergibt, ist bei der Verwendung von Singular-Formen bzw. Plural-Formen stets sowohl die Mehr- als auch die Einzahl umfasst.

Einer der Vorteile der erfindungsgemäßen Vorrichtung gegenüber den Vorrichtungen nach dem Stand der Technik ist es, dass ihre Rollen außer Betrieb gesetzt werden können ohne, dass sie auf dem Boden zu liegen kommen, so dass die Waschmaschine auf der Transportvorrichtung immobilisiert wird als ob sie auf dem Boden selbst fixiert würde. Hierdurch hat die Waschmaschine im Betrieb das gleiche Verhalten als ob sie ohne angebrachte Glieder der Vorrichtung auf dem Boden läge.

Die vorliegende Erfindung betrifft im Allgemeinen ein Glied einer Transportvorrichtung für Transportgut aufweisend eine vordere und eine hintere längliche Gleitleiste auf, wobei beide Gleitleisten einen annähernd U-förmigem Querschnitt haben und jeweils mit einem Ende in ihrer Längsrichtung versetzbar ineinander eingezogen sind. In jeder Gleitleiste ist an dem gegenüberliegenden Ende eine Vorrichtung untergebracht, welche die Fortbewegung des Glieds während des Transports von Transportgut über den Boden vereinfachen soll. Vorzugsweise ist dazu gegenüber dem Ende der Gleitleiste, welches in die andere Gleitleiste eingeschoben bzw. eingezogen (auf dem dazu gegenüberliegenden Ende) eine Rolleneinrichtung angeordnet. Dabei bilden die beiden ineinander geschobenen Gleitleisten mit ihren oberen, geschlossenen Bereichen (dem geschlossenen Bereich in dem U-förmigen Querschnitt) eine Transportfläche für das Transportgut und die gegenüberliegenden, offenen Bereiche (der Bereich zwischen den Schenkeln des U-förmigen Querschnitts) der Gleitleisten weisen beim Transport zum Boden hin. Wie schon erwähnt befinden sich an den Gleitleisten vorzugsweise Rolleneinrichtungen und deren Fortbewegung über den Boden zu ermöglichen. Dabei ist an der vorderen länglichen Gleitleiste eine vordere Rolleneinrichtung und an der hinteren länglichen Gleitleiste eine hintere Rolleneinrichtung angeordnet. Vorzugsweise ist in jeder der Rolleneinrichtungen eine Rolle oder mehrere Rollen angeordnet.

Die Rollen sind dabei derart in den Rolleneinrichtungen untergebracht, dass sie um ihre Längsachse rotieren können. Bevorzugt umfasst dazu jede Rolle eine Achse, die vorzugsweise als ein Stift ausgeformt ist. Die Rollen sind dabei in der jeweiligen Rolleneinrichtung vorzugsweise derart angeordnet, dass ihre Achsen senkrecht zu der Längsrichtung und parallel zu dem oberen Bereich der Gleitleiste vorliegen in welcher die jeweilige Rolleneinrichtung sich befindet. Dadurch dass die Drehrichtung der Rollen bei dieser Anordnung in Längsrichtung der Gleitleisten liegt, ermöglicht eine solche Anordnung eine einfache Fortbewegung des Gliedes auf einer Unterlage, z.B. auf dem Boden in der Längsrichtung der Gleitleisten, indem das Glied auf den Rollen aufliegend auf dem Boden rollen kann.

Das erfindungsgemäße Glied ist ferner dadurch gekennzeichnet, dass die vordere Rolleneinrichtung an der vorderen Seite ein versetzbar in der Längsrichtung der Glieds angeordnetes, annähernd U-förmiges Element aufweist, das zwei parallele Arme und ein die zwei parallelen Arme an einem ihrer Enden verbindendes Griffteil aufweist. Dieses U-förmige Element wird für die Zwecke dieser Beschreibung auch als Griff bezeichnet. Die parallelen Arme des Griffes weisen jeweils hintereinanderliegende Abschnitte auf, welche horizontale Flächen haben, die näher zu dem Griffteil hin angeordnet sind, und anschließende gleiche geneigte (bzw. schräge) Flächen, die näher zu dem freien Ende jedes Arms angeordnet sind. Wie die Bezeichnung schon sagt, weisen diese geneigten oder schrägen Fläche eine Neigung (bzw. Schräge) von der Seite der horizontalen Flächen zu den freien Enden der Arme auf. Die (Griff-)Arme werden dabei zwischen die Oberseite der Gleitleiste und den Stiften in die vordere Rolleinrichtung eingeschoben werden. Dadurch sind die Arme mit den Stiften der Rollen in Kontakt, vorzugsweise wobei die Stifte zumindest in einer Stellung des Griffes (Position des Griffes in der Gleitleiste) auf den Armen aufliegen, wenn das Glied mit den Rollen auf dem Boden liegt, wie nachfolgend noch genauer beschrieben wird.

Das erfindungsgemäße Glied ist vorzugsweise aus steifen und stabilen Materialien gebildet, welche dauerhaft die Last eines darauf positionierten Transportguts tragen können bzw. den sonst auf das Glied ausgeübten Kräften, wie z.B. beim Herausziehen und Hineinschieben des Griffteils standhalten können. Beispielhafte Materialien hierfür sind Metalle, Legierungen, Kunststoffe oder Holz. Unter Metallen werden besonders Stahl und Aluminium bevorzugt. Dabei ist das erfindungsgemäße Glied insgesamt aus einem Material geformt, oder seine Bestandteile sind aus verschiedenen Materialien hergestellt. So sind beispielsweise die Bestandteile des erfindungsgemäßen Glieds, wie die Gleitleisten, Rolleinrichtungen und der Griff aus einem Metall einer Legierung, einem Kunststoff oder Holz, oder jeweils aus unterschiedlichen Metallen, Legierungen, Kunststoffen oder Hölzern ausgeführt, vorzugsweise aus Stahl oder Aluminium; während die Rollen z.B. aus Kunststoff hergestellt sind. Die Glied-Bestendteile können auch jeweils für sich aus unterschiedlichen Materialien hergestellt sein. So ist beispielsweise das U-förmige Element mit dem Griffteil und den parallelen Armen ganz aus einem Material, wie einem Metall, Legierung, Kunststoff oder Holz ausgeführt, oder aus verschiedenen Materialien, z.B. das Griffteil aus Kunststoff oder Holz und die Arme aus einem Metall oder einer Legierung. Ähnlich bei den Rollen. Vorzugsweise werden die Rollen aus Kunststoff ausgeführt. Teile davon, z.B: der Stift oder, falls vorhanden, eine Hülse in der Rolle, durch welche der Stift verläuft sind dabei vorzugsweise aus einem Metall oder einer Legierung ausgeführt. In einer bevorzugten Ausführungsform ist der Griff (sowohl Griffteil wie die Arme) aus Kunststoff ausgeführt. Alternativ oder zusätzlich sind auch die Rolleneinrichtungen vollständig aus Kunststoff ausgeführt.

Vorzugsweise ist das erfindungsgemäße Glied derart gestaltet, dass die eine oder mehrere Rolle(n) an der hinteren Rolleneinrichtung so angeordnet ist, dass sie dauerhaft mit dem Boden in Kontakt ist und darauf rollen kann während die eine oder mehrere Rolle(n) an der vorderen Rolleneinrichtung in den Aufnahmebereichen vertikal zu der Längsrichtung des Glieds versetzbar angeordnet ist/sind. Vertikal zu der Längsrichtung des Glieds heißt, dass die Rollen in der Rolleneinrichtung näher oder weiter vom Boden vorliegen können.

Dabei ist das erfindungsgemäße Glied vorzugsweise so gestaltet, dass je nach Einschubposition des U-förmigen Elements dessen Arme derart mit den Stiften in Kontakt sind, dass die Rolle oder Rollen in der vorderen Rolleneinrichtung, wenn die Stifte, die als Achsen der Rollen dienen, auf den schrägen Flächen liegen, sie das Rollen des Gliedes ermöglichen, während wenn die Stifte auf den horizontalen Bereichen der Arme liegen, die Rolle oder Rollen lose in ihren Aufnahmebereichen liegen und somit das Glied immobilisieren. Das Ermöglichen des Rollen in der einen Position bzw. Immobilisieren in der anderen Position basiert dabei darauf, dass keine Auflagerkraft an das Glied weitergeleitet wird wenn die Rolle weiter vom Boden entfernt in der Rolleneinrichtung liegt, also entweder ohne Kontakt mit dem Boden oder auf gleicher Höhe wie die offenen Enden des U-förmigen Profils der Gleitleiste, so dass das Glied im Bereich der vorderen Rolleneinheit direkt auf dem Boden liegt, und das Glied mit dem darauf liegenden Transportgut nicht mehr über den Boden rollen kann. Zur Schonung des Bodens in dieser Stellung sind vorzugsweise Bereiche aus einem weicheren Material wie einem Kunststoff, Holz oder Filz an den Enden des U-förmigen Profils angebracht sein, die als (Abstell-)Füße dienen, wenn die Rollen ganz oder teilweise vertikal in die Rolleneinrichtungen verlagert sind.

Für das Funktionieren des Gliedes ist es ausreichend, dass das in jeder Rolleneinrichtung eine Rolle vorliegt. Vorzugsweise ist das erfindungsgemäße Glied aber derart ausgeführt, dass in jeder Rolleneinrichtung mindestens zwei Rollen angebracht sind.

Wie bereits oben angedeutet ist das erfindungsgemäße Glied vorzugsweise derart gestaltet, dass das Glied im vorderen Bereich angehoben wird, wenn das U-förmige Element (Griff mit Griffarmen) derart in die Rolleneinrichtung eingeschoben wird, dass die Stifte auf den schrägen Flächen der Arme liegen und dass das Glied gesenkt wird, wenn das U-förmige Element derart in die Rolleneinrichtung eingeschoben wird, dass die Stifte auf den horizontalen Flächen der Arme (14) liegen. Durch das Heben bzw. Absenken der Rollen wir das Immobilisieren oder Bewegen des Glieds der erfindungsgemäßen Transportvorrichtung ermöglicht.

Die horizontalen Abschnitte in den Armen des U-förmigen Elements (Griff mit Griffarmen) können unterschiedlich ausgeformt sein. So wird in einer bevorzugten Ausführungsform das erfindungsgemäße Glied derart ausgeführt, dass die horizontalen Flächen der hintereinanderliegenden Abschnitte gleich sind.

In einer anderen bevorzugten Ausführungsform wird das erfindungsgemäße Glied derart ausgeführt, dass die horizontalen Flächen, die näher zu dem Griffteil sind, von der anderen horizontalen Flächen verschieden sind. Die Flächen unterscheiden sich dabei in ihrer Länge. So sind in einer Ausführungsform die horizontalen Flächen, die näher zum Griffteil liegen länger als die horizontalen Flächen, die weiter vom Griffteil liegen.

Die Arme des Griffs sind vorzugsweise derart ausgeführt, dass der Auszugsweg des Griffs derart begrenzt wird, dass der Griff nicht vollständig aus der Rolleneinrichtung herausgezogen werden kann, wenn die Rollen auf den Griffarmen liegen, bzw. zumindest so, dass dies nur über einen Widerstand geht. Dieses wird vorzugsweise derart erreicht, dass an dem Ende der jeweiligen geneigten Flächen, die nicht unmittelbar an die horizontalen Flächen angrenzen jeweils eine Erhebung oder Sperrerhebung vorhanden ist. Beim Herausziehen des Griffs aus der Gleitleiste bewegt sich zuerst die horizontale, dann die geneigte Fläche unter dem Stift oder den Stiften der Rollen, bis dann die Erhebung erreicht wird. Die Erhebung ist derart ausgestaltet, dass, wenn das erfindungsgemäße Glied auf dem Boden liegt der Stift in der Rolleneinrichtung nicht genug Platz in der vertikalen Richtung hat, um über die Erhebung weiterbewegt werden zu können, z.B. indem die Erhebung derart bemessen ist, dass der Stift, um über diese hinwegkommen zu können, über (bzw. auf dem Boden unter) die offenen Enden der U-förmigen Leisten hinausbewegt werden müsste. Die Erhebung bildet zu der nachfolgenden horizontalen Fläche einen Winkel von vorzugsweise 90°. Zu der geneigten Fläche kann die Erhebung ebenfalls einen Winkel von mindestens 90°, vorzugsweise auch einen größeren Winkel bilden, wobei der Übergang von der geneigten Fläche zur Erhebung aber nicht abrupt sondern alternativ über einen kurzen bogenförmigen Übergang stattfinden kann. Liegen mehrere Rollen in der Rolleneinrichtung vor, so sind genauso viele Erhebungen auf den Armen des Griffs vorhanden. Die Abfolge der einzelnen Abschnitte auf dem Griff ist wie folgt zusammenzufassen, wobei hier ein Griffarm beschrieben wird und der andere Griffarm genauso ausgestaltet ist. Auf den Griffteil folgt zunächst der erste horizontale Abschnitt, dann die geneigte Fläche und die Erhebung. Nach der Erhebung folgen wieder ein horizontaler Abschnitt, eine geneigte Fläche und die Erhebung. Enthält die Rolleneinrichtung zwei Rollen, so endet hier der Griffarm, Sind mehr als zwei Rollen in der Rolleneinrichtung vorhanden, so wird die Abfolge - horizontaler Abschnitt - geneigter Abschnitt - Erhebung für jede weitere Rolle daran folgend angeschlossen.

Die Stifte, welche als Achsen für die Rollen dienen können unterschiedlich ausgeformt sein, indem z.B. ihre Enden rund oder flacht ausgeformt sind. In einer bevorzugten Ausführungsform ist das oben beschriebene erfindungsgemäße Glied, derart gestaltet, dass die Stifte an ihren Enden flach ausgeformt sind.

Eine beispielhafte Darstellung von Stiften, die an ihren Enden flach ausgeformt sind kann Fig. 9 entnommen werden. In der flachen Ausführung weisen die Stifte in der Mitte einen kreisrunden Querschnitt auf, während an den Enden Bereiche vorhanden sind, die zwei sich gegenüberliegende, zueinander parallele Abschnitte haben, zwischen denen der Stift weiterhin rund verläuft. Die Stifte sind also an deren Enden beidseitig abgeflacht. Vorzugsweise erstreckt sich der mittlere, runde Bereich der Stifte über den gesamten Bereich, in denen diese nach Einsetzen in die Rolle (bzw. mittels Hülse in die Rolle) von der Rolle umgeben sind, während nur die aus der Rolle herausragenden Stiftbereiche die genannte beidseitig abgeflachte Ausgestaltung aufweisen. Die Aufnahmebereiche für die Stifte in der Rolleneinrichtung sind bei der Verwendung von abgeflachten Stiften derart ausgeführt, dass die Stifte nur dann in diese eingesetzt werden können, wenn die flachen Bereiche parallel zu den vertikalen, gerade verlaufenden Begrenzungen der Aufnahmebereiche verlaufen. Wird der Stift mit den runden Bereichen zu denen gedreht ist sein Durchmesser zu groß um in den Aufnahmebereich eingeführt zu werden. Bei der Einführung mit den flachen Bereichen parallel zu den Begrenzungen der Aufnahmebereiche sitzt der Stift verdrehsicher in dem Aufnahmebereich und kann beim Rollen des Gliedes und somit der Rolle auf dem Boden nicht darin durchdrehen. Die Rolle dagegen, die nur lose auf dem Stift aufgesetzt ist, also durch welche der Stift nur durchgeführt, nicht aber mit ihr verbunden ist, kann frei um den mittleren, runden Bereich des Stiftes rotieren, wodurch das erfindungsgemäße Glied, bzw. die Transportvorrichtung über den Boden rollen kann.

In einer anderen bevorzugten Ausführungsform ist das oben beschriebene erfindungsgemäße Glied derart gestaltet, dass die Stifte durchgehend rund ausgeformt sind, also einen kreisrunden Querschnitt haben.

Die Rolleneinrichtungen können Teil der Gleitleisten sein oder sie können eigenständig ausgebildet sein. Vorzugsweise ist das erfindungsgemäße Glied derart gestaltet, dass die Rolleneinrichtungen eigenständige Profilkörper sind, welche mit den Gleitleisten verbunden sind. Die Verbindung kann unterschiedlich gewährleistet werden. So können die Rolleneinrichtungen derart passgenau ausgeführt werden, dass sie nach Einführung in die Gleitleisten von den enganliegenden Armen der Gleitleisten in diesen gehalten werden. Alternativ oder zusätzlich sind die Rolleinrichtungen vorzugsweise mit Verbindungsmitteln mit den Gleitleisten verbunden. Beispielhafte Verbindungsmittel hierzu sind Schrauben oder Nieten.

Wie schon oben ausgeführt, ist das erfindungsgemäße Glied derart ausgeführt, dass es den Boden, über den es mit dem Transportgut bewegt wird soweit wie möglich schont. Vorzugsweise ist das erfindungsgemäße Glied hierzu derart gestaltet, dass die vordere Gleitleiste, also die Gleitleiste in die der Griff eingesetzt wird, Abstützbereiche aufweist, auf denen die Gleitleiste auf dem Boden aufliegt, wenn die Stifte auf den horizontalen Bereichen der Arme liegen (also in der immobilen Stellung des Gliedes).

Desweiteren wird durch die vorliegende Erfindung eine Transportvorrichtung zum Transport von verschiedenen Transportgütern zur Verfügung gestellt, die mehr als ein Glied, vorzugsweise zwei Glieder nach einem der vorangehenden Ansprüche umfasst. Zum Transport werden die Glieder in der erfindungsgemäßen Transportvorrichtung unterhalb des Transportgutes mit den Rollen zum Boden derart platziert, dass die beiden Glieder mit ihren Längsseiten parallel und in einem Abstand voneinander liegen, wobei die vorderen Enden der beiden Glieder in die gleiche Richtung weisen. Eine Beispielhafte Anordnung von zwei Gliedern in einer erfindungsgemäßen Transportvorrichtung ist in Figs. 2 und 3 gezeigt.

Die erfindungsgemäße Transportvorrichtung ist derart ausgestaltet, dass sie zum Transport unterschiedlicher Transportgüter verwendet werden kann, vorausgesetzt, dass das Transportgut eine ebene Fläche aufweist, die zumindest während des Transports parallel zum Boden auf der erfindungsgemäßen Transportvorrichtung gelegt werden kann. Vorzugsweise wird eine erfindungsgemäße Transportvorrichtung zur Verfügung gestellt, wobei das Transportgut ausgewählt wird aus der Gruppe bestehend aus Haushaltsgeräten, insbesondere aus Waschmaschinen, Trocknern, Herden, Spülmaschinen und aus Transportbehältern.

Desweiteren ist die vorliegende Erfindung darauf gerichtet, zahlreiche Verwendungen der erfindungsgemäßen Glieder oder der Transportvorrichtung bereitzustellen. In einer bevorzugten Ausführungsform wird durch die vorliegende Erfindung eine Verwendung von mindestens zwei erfindungsgemäßen Gliedern oder der Transportvorrichtung wie hierin offenbart zum Transport von Transportgütern, vorzugsweise wobei das Transportgut ausgewählt wird aus der Gruppe bestehend aus Waschmaschinen, Trocknern, Herden, Spülmaschinen und Transportbehältern.

Ferner wird durch die vorliegende Erfindung auch ein Verfahren zum Transport von Transportgütern bereitgestellt. Dieses erfindungsgemäße Verfahren umfasst vorzugsweise die folgenden Schritte:
a) platzieren von mindestens zwei erfindungsgemäßen Gliedern oder der erfindungsgemäßen Transportvorrichtung unter dem zu bewegenden Transportgut an dessen ursprünglichem Standort, derart dass die Rollen zum Boden und dass das Transportgut auf der Transportfläche der Glieder liegt; und
b) bewegen des Transportguts von dessen ursprünglichen Standort.

Bevorzugt wird bei dem erfindungsgemäßen Verfahren das Transportgut ausgewählt aus der Gruppe bestehend aus Haushaltsgeräten wie Waschmaschinen, Trocknern, Herden, Spülmaschinen und aus Transportbehältern.

Letztlich wird durch die vorliegende Erfindung auch eine Vorrichtung bereitgestellt, umfassend mindestens 2 der erfindungsgemäßen Glieder oder die erfindungsgemäße Transportvorrichtung wie hierin beschrieben. In einer bevorzugten Ausführungsform sind die erfindungsgemäßen Glieder oder die erfindungsgemäße Transportvorrichtung vorzugsweise fest mit der Vorrichtung verbunden oder bilden mit dieser eine Einheit. Alternativ kann die erfindungsgemäße Vorrichtung mit Aufnahmebereichen für die erfindungsgemäßen Glieder oder für die erfindungsgemäße Transportvorrichtung ausgestattet sein. Die Aufnahmebereiche sind dabei derart gestaltet, dass sie eine zumindest verrutschsichere Aufnahme der Glieder, bzw. der Transportvorrichtung mit der Vorrichtung gewährleisten und besonders bevorzugt eine feste Verbindung der Vorrichtung mit den Gliedern oder der Transportvorrichtung ermöglichen und eine Bewegung der Vorrichtung auf den Rollen in den Rolleneinrichtungen über den Boden zulassen. Hierzu sind die Abmessungen der Aufnahmebereiche beispielsweise so groß, dass jeder Aufnahmebereich ein erfindungsgemäßes Glied aufnehmen kann, wobei die Glieder derart mit der Vorrichtung verbunden werden, dass sie zusammen eine erfindungsgemäße Transportvorrichtung bilden, wie hierin vorher beschrieben. Zusätzlich oder alternativ weist die erfindungsgemäße Vorrichtung in den Aufnahmebereichen Vertiefungen und/oder Bohrungen auf, welche zur festen Verbindung der Glieder/der Transportvorrichtung mit der Vorrichtung verwendet werden können- Vorzugsweise wird die erfindungsgemäße Vorrichtung dabei ausgewählt wird aus der Gruppe bestehend aus Haushaltsgeräten wie Waschmaschinen, Trocknern, Herden, Spülmaschinen und aus Transportbehältern.

### Beispiele

Die Abbildungen zeigen eine beispielhafte und bevorzugte Ausführungsform der erfindungsgemäßen Glieder und Transportvorrichtung. Daher werden nachfolgend als Beispiel der erfindungsgemäßen Vorrichtungen diese Abbildungen besprochen.

In Bezug auf eine exemplarische Ausführung der Erfindung zeigt Figur 1 in perspektiver Ansicht, schräg von vorne und oben, eine Transportvorrichtung (1) für eine Waschmaschine, die erfindungsgemäß aus zwei gleichen ausfahrbaren Gliedern (2, 2') besteht, bevor eine Waschmaschine (3) oder ein anderes Haushaltsgerät oder Transportgut auf die Vorrichtung aufgelegt wird. An dem vorderen Abschnitt jedes Glieds (2, 2') sind Griffe (4, 4') angeordnet. Bei Ziehen der Griffe (4, 4') nach vorne wird die Vorrichtung (1) ausgelöst und die volle Vorrichtung mit der darauf liegenden Waschmaschine kann versetzt werden, wie es weiter unten und oben beschrieben ist. Kurz dargelegt, geraten dabei die geneigten/schrägen Bereiche der Griffarme unter die Stifte (7', 8', 9', 10'), die als Achsen der Rollen dienen, und die Rollen (7, 8, 9, 10) werden nach unten abgesenkt, geraten dabei derart mit dem Boden in Kontakt, dass sie das Glied bzw. die Transportvorrichtung mit der Transportlast vom Boden heben, sodass z.B. die zu transportierende Waschmaschine auf den Rollen (7, 8, 9, 10) über den Boden geschoben werden können. Sind Plastikfüße an den Gliedern bzw. der Transportvorrichtung angebracht, so verlieren diese durch den beschriebenen Vorgang Kontakt zum Boden, so dass die Waschmaschine als beispielhafte zu transportierende Last über den Boden gerollt werden kann.

Figur 2 zeigt in perspektivischer Ansicht (Aufsicht), schräg von vorne und oben, die erfindungsgemäße Transportvorrichtung (1) aus zwei gleichen ausfahrbaren Gliedern (2, 2'), wobei eine Waschmaschine (3) auf der Transportvorrichtung (1) aufgelegt ist. Die hervorragenden Griffe (4, 4') sind ebenfalls gezeigt.

Figur 3 zeigt in perspektivischer Ansicht, schräg von vorne und oben, die Seite der Transportvorrichtung (1), die auf dem Boden liegt, wobei die Vorrichtung aus zwei gleichen ausfahrbaren Gliedern (2, 2') besteht.

Figur 4 zeigt in perspektivischer Ansicht die untere Seite eines Glieds (2, 2') der erfindungsgemäßen Transportvorrichtung (1) in Explosionsdarstellung, wobei die beiden Abschnitte jedes Glieds (2, 2') gezeigt sind, die ineinander fahrbar sind um das Glied (2) zu formen. Die Abschnitte jedes Glieds (2, 2') sind Π- bzw. annähernd U-förmig, so dass der hintere Abschnitt in den vorderen Bremsabschnitt eingefahren sein kann und auf die unterschiedlichen Dimensionen, abhängig von der Tiefe der Waschmaschine (3) bzw. des anderen Geräts/Objekts angepasst werden kann.

Figur 5 zeigt in perspektivischer Ansicht von unten das Glied der erfindungsgemäßen Transportvorrichtung (1) in Explosionsdarstellung mit den Rollen (7, 8, 9, 10) und den korrespondierenden Stiften (7', 8', 9', 10'), die die Rollen (7, 8, 9, 10) der beiden Abschnitte des Glieds (2) tragen und mit dem Griff (4) auch in Explosionsdarstellung. Die Rollen (7, 8) gehören zu dem vorderen Bremsabschnitt des Glieds (2) mit den korrespondierenden Stiften (7', 8'), die die Rollen (7, 8) des vorderen Bremsabschnitts des Glieds (2) tragen. Die Rollen (9, 10) gehören zu dem hinteren Abschnitt des Glieds (2) mit den korrespondierenden Stiften (9', 10'), die die Rollen (9, 10) des hinteren Abschnitts des Glieds (2) tragen. Der vordere Bremsabschnitt des Glieds (2) ist der Teil, der im Wesentlichen die Bremseinrichtung der Vorrichtung ist, denn beim Ziehen des Griffs (4) nach außen sind die Rollen (7, 8) heruntergefahren und rutschen nach vorne oder hinten auf dem Boden, so dass die Vorrichtung (1) mit der aufliegenden Last versetzt werden kann, z.B. in der gezeigten Ausführung der Waschmaschine (3) bzw. dem Gerät/Objekt auf der Transportvorrichtung (1) aus den beiden Gliedern (2, 2). Wenn die bevorzugten Reinigungsarbeiten usw. vollständig ausgeführt sind, setzt der Bediener die Vorrichtung (1) mit der Waschmaschine (3) auf die Immobilisationsstelle zurück und schiebt allein die beiden Griffe (4,4') nach innen. Bei Schieben der Griffe (4, 4'), werden die Rollen der vorderen Abschnitte der Glieder (2, 2') angehoben und die Kunststofffüße (11, 11') der vorderen Abschnitte der Glieder (2, 2') werden auf den Boden gesetzt, so dass die Glieder (2, 2') mit der auf der Vorrichtung liegenden Waschmaschine (3) fixiert werden. Die Rollen (9, 10, 9, 10') der hinteren Abschnitte liegen dauerhaft auf dem Boden, ohne angehoben zu werden.

Figur 6 zeigt in perspektivischer Ansicht ein Detail des vorderen Bremsabschnitts des Glieds (2) der erfindungsgemäßen Transportvorrichtung für eine Waschmaschine, in Explosionsdarstellung mit den Rollen (7, 8) und den korrespondierenden Stiften (7', 8'), die die Rollen (7,8) des vorderen Bremsabschnitts des Glieds (2) tragen. Jede Rolle (7, 8) ist in jeweils einer geeigneten Aussparung (7", 8") eingefahren, die in dem Abschnitt ausgeformt ist, wobei der Griff (4) Π-förmig mit schrägen bzw. geneigten Flächen ist, die die Rollen hinunter fahren lassen, so dass das Gerät nach vorne gefahren werden kann, um den Raum hinter der Waschmaschine zu reinigen oder Wartungs- oder Reinigungsarbeiten an dem hinteren Teil zu ausführen. Die vorderen Schrauben (Füße - nicht gezeigt) einer herkömmlichen Waschmaschine (3) werden in die speziell ausgeformten Aussparungen an dem vorderen Bremsabschnitt des Glieds (2) der Vorrichtung (1) eingeführt, und die hinteren Schrauben (nicht gezeigt) werden in die Aussparungen des hinteren Abschnitts des Glieds (2) der Vorrichtung (1) eingeführt. Die Aussparungen in dem vorderen Bremsabschnitt des Glieds (2) sind in ihren Abmessungen passend ausgeformt so dass die Schrauben der Waschmaschine aufgenommen werden können, um die Waschmaschine (3) zu fixieren, ohne dass die Waschmaschine (3) oder das Gerät/Objekt von der Vorrichtung (1) abrutscht.

Das Glied (2, 2') der Erfindung und die aus zwei Gliedern (2, 2') bestehende Vorrichtung (1) kann in anderen Anwendungen, d.h. flexibel zum Transport von unterschiedlichen Transportgütern zusätzlich zu Haushaltsgeräten verwendet werden, z.B. unter einem Schrank oder allgemein unter einem schweren Objekt, um das schwere Objekt zu immobilisieren und bei Bedarf unkompliziert verschieben zu können, insbesondere auch häufig verschieben zu können, z.B. bei schweren Objekten, die häufig ihren Standort wechseln müssen. Insbesondere bei solchen Objekten zeigt sich die Flexibilität und einfache Verwendung der erfindungsgemäßen Glieder und Transportvorrichtung. Sie muss nur einmal unter dem zu transportierenden Objekt untergebracht werden und kann danach dort belassen werden, da das Objekt an dem gewünschten Standort immobilisiert werden kann (durch Hineinschieben der Griffelemente in die jeweiligen Glieder). Ist es später wieder notwendig das Objekt zu bewegen, so kann dies auch durch eine Person erreicht werden, da das Objekt nicht wieder angehoben werden muss, sondern einfach die Griffelemente herausgezogen, so dass die Rollen in der vorderen Rolleneinrichtung wieder Kontakt mit dem Boden haben. Hiernach kann das Objekt wieder einfach verschoben werden.

Im Wesentlichen gibt die obige Beschreibung auch das hier offenbarte Verfahren beispielhaft wieder. Um z.B. eine Waschmaschine zu transportieren, wird diese zuerst angehoben und mindestens zwei der in den Figuren dargestellten Glieder werden im Abstand und parallel zueinander unter der Waschmaschine platziert, so dass die Waschmaschine auf den Oberseiten der Glieder, die eine Transportfläche bilden liegt. Falls die Griffe in der Bremsstellung sind, d.h. falls die Rollen an der vorderen Rolleinrichtung keinen Kontakt zum Boden haben, werden die Griffe soweit aus den Gliedern herausgezogen, bis die erfindungsgemäßen Glieder auch im Bereich der vorderen Rolleneinrichtung auf den Rollen liegen. Hiernach wird die Waschmaschine durch deren Ziehen oder Schieben auf der erfindungsgemäßen Transportvorrichtung von dem ursprünglichen Standort and den gewünschten neuen Standort bewegt. Dort angekommen kann die Waschmaschine gegen ungewünschtes Wegrollen entweder durch Entfernen der Transportvorrichtung oder durch Einschieben der Griffe in die Glieder immobilisiert werden. Bei einem Haushaltsgerät welches die erfindungsgemäße Transportvorrichtung bereits festmontiert in spezifischen Aufnahmebereichen am Unterboden des Haushaltsgeräts aufweist entfällt natürlich der Schritt des Anbringens der Transportvorrichtung und das Gerät kann nach Lösen (Hinausziehen) des bzw. der Griffe direkt fortbewegt werden.

### Bezugszeichenliste:

1 - Transportvorrichtung
2, 2' - Glied (einer Transportvorrichtung)
3 - Waschmaschine (Haushaltsgerät)
4 / 4' - annähernd U-förmiges (Griff-)Element
5 - vordere längliche Gleitleiste (mit U-förmigen (Griff-)Element)
6 - hintere längliche Gleitleiste
7 / 7' - Rolle / Stift
8 / 8' - Rolle / Stift
9 / 9' - Rolle / Stift
10 / 10'- Rolle / Stift
11 / 11' - (Kunststoff-)Fuß
12, 12' - vordere, hintere Rolleneinrichtung
13, 13' - (Sperr-)Erhebung
14 - parallele Arme des U-förmigen (Griff-)Elements
15 - Griffteil des U-förmigen (Griff-)Elements
16, 16' - horizontale Flächen des Griffteils
17 - geneigte/schräge Flächen des Griffteils
18 / 18' - vordere Aufnahmebereich für das Glied bzw. Transportvorrichtung
19 / 19'- hintere Aufnahmebereich für das Glied bzw. Transportvorrichtung
20 - Hülse / Innenbereich der Rolle
21 - Außenbereich der Rolle

## Patentansprüche

1. Glied (2) einer Transportvorrichtung (1) für Transportgut aufweisend eine vordere (5) und eine hintere (6) längliche Gleitleiste auf, wobei beide Gleitleisten (5, 6) einen annähernd U-förmigem Querschnitt haben, jeweils mit einem Ende in ihrer Längsrichtung versetzbar ineinander eingezogen sind und wobei in jeder Gleitleiste an dem gegenüberliegenden Ende eine Rolleneinrichtung (12, 12') angeordnet ist,
wobei die beiden ineinander geschobenen Gleitleisten mit ihren oberen, geschlossenen Bereichen eine Transportfläche für das Transportgut bilden und die gegenüberliegenden, offenen Bereiche der Gleitleisten beim Transport zum Boden hinweisen,
wobei an der vorderen länglichen Gleitleiste (5) eine vordere (12) Rolleneinrichtung und an der hinteren länglichen Gleitleiste eine hintere (12') Rolleneinrichtung angeordnet ist, wobei in jeder der Rolleneinrichtungen eine oder mehrere Rolle(n) (7, 8, 9, 10) angeordnet ist, und
wobei jede Rolle (7, 8, 9, 10) einen Stift (7', 8', 9', 10') als Achse umfasst, wobei die Rollen in der jeweiligen Rolleneinrichtung derart angeordnet sind, dass ihre Achsen senkrecht zu der Längsrichtung und parallel zu dem oberen Bereich der Gleitleiste vorliegen in welcher die jeweilige Rolleneinrichtung sich befindet;
**dadurch gekennzeichnet, dass** die vordere Rolleneinrichtung (12) an der vorderen Seite ein versetzbar in der Längsrichtung der Glieds (2) angeordnetes, annähernd U-förmiges Element (4) aufweist, das zwei parallele Arme (14) und ein die zwei parallelen Arme (14) an einem ihrer Enden verbindendes Griffteil (15) aufweist,
wobei die parallelen Arme (14) jeweils hintereinanderliegende Abschnitte aufweisen, welche horizontale Flächen (16) haben, die näher zu dem Griffteil (15) angeordnet sind, und anschließende gleiche geneigte Flächen (17), die näher zu dem freien Ende jedes Arms angeordnet sind und eine Neigung von der Seite der horizontalen Flächen (16) zu den freien Enden der Arme (14) aufweisen, und
wobei die Arme (14) zwischen die Oberseite der Gleitleiste und den Stiften (7', 8', 9', 10') in die vordere Rolleinrichtung (12) eingeschoben werden;
wobei ferner die eine oder mehrere Rolle(n) (9, 10) an der hinteren Rolleneinrichtung (12') so angeordnet ist, dass sie dauerhaft mit dem Boden in Kontakt ist und darauf rollen kann und die eine oder mehrere Rolle(n) (7, 8) an der vorderen Rolleneinrichtung (12) in den Aufnahmebereichen (18, 18', 19, 19') vertikal zu der Längsrichtung des Glieds (2) versetzbar angeordnet ist,wobei je nach Einschubposition des U-förmigen Elements (4) dessen Arme (14) derart mit den Stiften in Kontakt sind, dass die Rolle(n) (7, 8) in der vorderen Rolleneinrichtung (12), wenn die Stifte (7', 8') auf den schrägen Flächen (17) liegen, das Rollen des Gliedes (2) ermöglichen, während wenn die Stifte (7', 8') auf den horizontalen Bereichen der Arme (14) liegen, die Rolle(n) (7, 8) lose in ihren Aufnahmebereichen (18, 18', 19, 19') liegen und somit das Glied (2) immobilisieren und wobei das Glied (2) im vorderen Bereich angehoben wird, wenn das U-förmige Element (4) derart in die Rolleneinrichtung (12) eingeschoben wird, dass die Stifte auf den schrägen Flächen der Arme (14) liegen und dass das Glied (2) gesenkt wird, wenn das U-förmige Element (4) derart in die Rolleneinrichtung eingeschoben wird, dass die Stifte auf den horizontalen Flächen der Arme (14) liegen.

2. Glied (2) nach Anspruch 1, wobei in jeder Rolleneinrichtung (12, 12') mindestens zwei Rollen (7, 8, 9, 10) angebracht sind.

3. Glied (2) nach einem der vorangehenden Ansprüche, wobei die horizontalen Flächen (16) der hintereinanderliegenden Abschnitte gleich sind.

4. Glied (2) nach einem der Ansprüche 1 bis 3, wobei die horizontalen Flächen (16), die näher zu dem Griffteil (15) sind, von den anderen horizontalen Flächen verschieden sind.

5. Glied (2) nach einem der vorhergehenden Ansprüche, wobei die Stifte (7', 8') an ihren Enden flach ausgeformt sind.

6. Glied (2) nach einem der vorangehenden Ansprüche, wobei die Rolleneinrichtungen (12, 12') eigenständige Profilkörper sind, welche mit den Gleitleisten verbunden sind.

7. Glied (2) nach einem der Ansprüche 1 bis 6, wobei die vordere Gleitleiste Abstützbereiche aufweist, auf denen die Gleitleiste auf dem Boden aufliegt, wenn die Stifte (7', 8') auf den horizontalen Bereichen der Arme (14) liegen.

8. Transportvorrichtung (1) zum Transport von verschiedenen Transportgütern, die mehr als ein Glied (2), vorzugsweise zwei Glieder (2) nach einem der vorangehenden Ansprüche umfasst.

9. Transportvorrichtung nach Anspruch 8, wobei das Transportgut ausgewählt wird aus der Gruppe bestehend aus Waschmaschinen, Trocknern, Herden, Spülmaschinen und Transportbehältern.

10. Verwendung von mindestens zwei Gliedern (2) nach einem der Ansprüche 1 bis 7 oder der Transportvorrichtung (1) nach Anspruch 8 oder 9 zum Transport von Transportgütern, vorzugsweise wobei das Transportgut ausgewählt wird aus der Gruppe bestehend aus Waschmaschinen, Trocknern, Herden, Spülmaschinen und Transportbehältern.

11. Verfahren zum Transport von Transportgütern umfassend die folgenden Schritte:
a) platzieren von mindestens zwei Gliedern (2) nach einem der Ansprüche 1 bis 7 oder der Transportvorrichtung (1) nach Anspruch 8 oder 9 unter dem zu bewegenden Transportgut an dessen ursprünglichem Standort, derart dass die Rollen (7, 8, 9, 10) zum Boden und dass das Transportgut auf der Transportfläche der Glieder (2) liegt; und
b) bewegen des Transportguts von dessen ursprünglichen Standort; vorzugsweise wobei das Transportgut ausgewählt wird aus der Gruppe bestehend aus Waschmaschinen, Trocknern, Herden, Spülmaschinen und Transportbehältern.

12. Eine Vorrichtung, umfassend mindestens 2 Glieder (2) nach einem der Ansprüche 1 bis 7 oder die Transportvorrichtung (1) nach Anspruch 8 oder 9 oder mit Aufnahmebereichen für die Glieder (2) nach einem der Ansprüche 1 bis 7 oder für die Transportvorrichtung (1) nach Anspruch 8 oder 9, wobei die Aufnahmebereiche (18, 18', 19, 19') derart gestaltet sind, dass sie eine feste Verbindung mit den Gliedern oder der Transportvorrichtung (1) ermöglichen und eine Bewegung der Vorrichtung auf den Rollen (7, 8, 9, 10) in den Rolleneinrichtungen (12, 12') über den Boden zulassen, vorzugsweise wobei die Vorrichtung ausgewählt wird aus der Gruppe bestehend aus Waschmaschinen, Trocknern, Herden, Spülmaschinen und Transportbehältern.

## Claims

1. Member (2) of a transfer device (1) for moving appliances that has a front part (5) and a rear part (6), and a rear longitudinal slide rail (6), wherein the two slide rails (5, 6) have an approximately U-shaped cross-section, they are nested into each other with one end offset in their longitudinal direction and wherein a roller device (12, 12') is arranged in each slide rail at the opposite end,
where the closed upper areas of the two rails are pushed into each other to form a transport surface for the movement of the appliances to be moved and where the opposite open areas of the rails face the ground during the movement,
where a front roller device (12) on the front longitudinal slide rail (5) and a rear roller device (12') on the rear longitudinal slide bar are arranged where one or more rollers (7, 8, 9, 10) are arranged in each of the roller device, and
where each roller (7, 8, 9, 10) comprises a pin (7', 8', 9', 10'), where the rollers are arranged in the respective roller device in a way that their pins are perpendicular to the longitudinal direction and parallel to the upper area of the slide rail in which the respective roller device is located;
**characterised in that** the front roller device (12) has on the front side a U-shaped element (4) which is arranged so as to be displaceable in the longitudinal direction of the member (2) and which has two parallel arms (14) and has a grip member (15) connecting the two parallel arms (14) at one of their ends,
where each of the parallel arms (14) has successive portions having horizontal surfaces (16) disposed closer to the grip member (15) with connected inclined surfaces (17), which are closer to the free end of each arm and are inclined from the side of the horizontal surfaces (16) towards the free ends of the arms (14), and
where the arms (14) are positioned between the top of the slide rail and the pins (7', 8', 9', 10') and are pushed into the front roller device (12);
where the one of the multiple rollers (9, 10) of the rear roller device (12') is arranged so as to be in permanent contact with the ground and to be able to roll on it, and one of the multiple rollers (7, 8) of the front roller device (12) is in the receiving areas (18, 18', 19, 19') can be displaced vertically with respect to the longitudinal direction of the member (2), where, according to each pushing in position of the U-shaped element (4), its arms (14) are in contact with the pins, so that the roller(s) (7, 8) of the front roller device (12), when the pins (7', 8') rest on the inclined surfaces (17), allow the member (2) to roll, whereas when the pins (7', 8') rest on the horizontal surfaces of the arms (14), the roller(s) (7, 8) rest freely in their receiving zones (18, 18', 19, 19') and thus immobilize the member (2), and where the member (2) is raised in the front region, when the U-shaped element (4) is pushed into the roller device (12) so that the pins rest on the inclined surfaces of the arms (14) and so that the member (2) is lowered, when the U-shaped element (4) is pushed into the roller device, so that the pins rest on the horizontal surfaces of the arms (14).

2. Member (2) according to claim 1, where at least two rollers (7, 8, 9, 10) are fixed in each roller device (12, 12').

3. Member (2) according to any of the preceding claims, where the horizontal surfaces (16) of the consecutive portions are equal.

4. Member (2) according to any one of claims 1 to 3, where the horizontal surfaces (16) which are closest to the grip portion (15) are different from the other horizontal surfaces.

5. Member (2) according to any of the preceding claims, wherein the pins (7', 8') are formed flat at their ends.

6. Member (2) according to one of the preceding claims, where the roller devices (12, 12') have independent profiled bodies, which are connected to the slide rails.

7. Member (2) according to any one of claims 1 to 6, where the front slide rail comprises bearing portions, on which the slide rail rests on the ground, when the pins (7', 8') rest on the horizontal portions of the arm (14).

8. Transport device (1) for the movement of various appliances, which has more than one element (2), preferably two elements (2) according to one of the preceding claims.

9. Transport device according to claim 8, where the appliances to be moved are selected from the group consisting of washing machines, tumble dryers, ovens, dishwashers and transport containers.

10. Use of at least two members (2) according to one of claims 1 to 7 or of the transport device (1) according to claim 8 or 9 for the movement of appliances to be moved, preferably where the appliances to be moved are selected from the group consisting of washing machines, tumble dryers, ovens, dishwashers and transport containers.

11. A method for the movement of appliances comprising the following steps:
a) placing at least two members (2) according to one of claims 1 to 7 or the transport device (1) according to claim 8 or 9 under the appliances to be moved to their original location, so that the rollers (7, 8, 9, 10) face the ground and the transported appliances rest on the transport surface of the members (2); and
b) moving the transported appliances from their original location; preferably, the transported appliances are selected from the group consisting of washing machines, tumble dryers, ovens, dishwashers and transport containers.

12. Device comprising at least 2 members (2) according to one of claims 1 to 7 or the transport device (1) according to claim 8 or 9 or with receiving areas for the members (2) according to one of claims 1 to 7 or for the transport device (1) according to claim 8 or 9, where the receiving areas (18, 18', 19, 19') are designed such that they form a fixed connection with the members or the transport device (1) and allow the movement of the device on the rollers (7, 8, 9, 10) in the roller devices (12, 12') on the floor, preferably in the case where the appliance is selected from the group consisting of washing machines, dryers, ovens, dishwashers and transport containers.

## Revendications

1. Membre (2) d'un dispositif de transport (1) pour le mouvement des appareils transportés comprenant une partie avant (5) et une partie arrière (6), et un rail de glissement longitudinale arrière (6), où les deux rails de glissement (5, 6) ont une section transversale approximativement en forme de U, ils sont emboîtés l'un dans l'autre avec une extrémité décalée dans leur direction longitudinale et où un dispositif à rouleaux (12, 12') est disposé dans chaque rail de glissement à l'extrémité opposée,
où les zones supérieures fermées des deux rails sont poussées l'une dans l'autre pour former une surface de transport pour les appareils transportés et où les zones opposées ouvertes des rails sont orientées vers le sol pendant le mouvement,
où un dispositif à rouleaux avant (12) sur le rail de glissement longitudinale avant (5) et un dispositif à rouleaux arrière (12') sur le rail de glissement longitudinale arrière sont disposés, où un ou plusieurs rouleaux (7, 8, 9, 10) étant disposés dans chacun des dispositifs à rouleaux, et
où chaque rouleau (7, 8, 9, 10) comprend un axe (7', 8', 9', 10'), où les rouleaux sont disposés dans le dispositif à rouleaux respectif de telle sorte que leurs axes sont perpendiculaires à la direction longitudinale et parallèles à la zone supérieure du rail dans lequel se trouve le dispositif à rouleaux respectif,
**caractérisé en ce que** le dispositif à rouleaux avant (12) comporte sur la face avant un élément en forme de U (4) qui est disposé de manière à pouvoir être déplacé dans la direction longitudinale du membre (2) et qui comporte deux bras parallèles (14) et a une partie de poignée (15) reliant les deux bras parallèles (14) à l'une de leurs extrémités,
où chacun des bras parallèles (14) comprenne des parties successives ayant des surfaces horizontales (16) disposées plus près de la partie poignée (15) et avec des surfaces inclinées (17) qui sont plus proches à l'extrémité libre de chaque bras et sont inclinés du côté des surfaces horizontales (16) vers les extrémités libres des bras (14), et
où les bras (14) sont positionnés entre le haut du rail de glissement et les goupilles (7', 8', 9', 10') et ils sont poussés dans le dispositif à rouleaux avant (12),
où l'un des multiples rouleaux (9, 10) du dispositif à rouleaux arrière (12') est disposé de manière à être en contact permanent avec le sol et à pouvoir y rouler, et l'un des multiples rouleaux (7, 8) du dispositif à rouleaux avant (12) est disposé dans les zones de réception (18, 18', 19, 19') de manière à pouvoir être déplacé verticalement par rapport à la direction longitudinale du membre (2), où selon la position d'insertion de l'élément en forme U (4), ses bras (14) sont en contact avec les goupilles de telle sorte que le(s) rouleau(x) (7, 8) du dispositif à rouleaux avant (12), lorsque les goupilles (7', 8') reposent sur les surfaces inclinées (17), permettent de rouler le membre (2), tandis que lorsque les goupilles (7', 8')) reposent sur les surfaces horizontales des bras (14), le(s) rouleau(x) (7, 8) reposent librement dans leurs zones de réception (18, 18', 19, 19') et immobilisent ainsi le membre (2), et où le membre (2) est soulevé dans la zone avant lorsque l'élément en forme de U (4) est poussé dans le dispositif à rouleaux (12) de telle sorte que les goupilles reposent sur les surfaces inclinées des bras (14) et que le membre (2) est abaissé lorsque l'élément en forme de U (4) est poussé dans le dispositif à rouleaux de telle sorte que les goupilles reposent sur les surfaces horizontales des bras (14).

2. Membre (2) selon la revendication 1, où au moins deux rouleaux (7, 8, 9, 10) sont fixés dans chaque dispositif à rouleaux (12, 12').

3. Membre (2) selon l'une quelconque des revendications précédentes, où les surfaces horizontales (16) des portions consécutives sont égales.

4. Membre (2) selon l'une quelconque des revendications 1 à 3, où les surfaces horizontales (16) les plus proches de la partie poignée (15) sont différentes des autres surfaces horizontales.

5. Membre (2) selon l'une des revendications précédentes, où les goupilles (7', 8') sont formées plates à leur extrémité.

6. Membre (2) selon l'une des revendications précédentes, où les dispositifs à rouleaux (12, 12') sont des corps profilés indépendants qui sont reliés aux rails de glissement.

7. Membre (2) selon l'une des revendications 1 à 6, où le rail de glissement avant comporte des portions d'appui, sur lesquelles la barre de glissement repose sur le sol, lorsque les axes (7', 8') reposent sur les portions horizontales du bras (14).

8. Dispositif de transport (1) pour le mouvement d'appareils differents, comprenant plus d'un membre (2), de préférence deux membres (2) selon l'une des revendications précédentes.

9. Dispositif de transport selon la revendication 8, où les d'appareils à transporter sont choisies du groupe constitué par les lave-linge, les sèche-linge, les fours, les lave-vaisselle et les conteneurs de transport.

10. Utilisation d'au moins deux membres (2) selon l'une des revendications 1 à 7 ou du dispositif de transport (1) selon la revendication 8 ou 9 pour transporter des appareils transportés, de préférence où les produits de transport sont choisis du groupe constitué par les machines à laver, les sèche-linge, les fours, les lave-vaisselle et les conteneurs de transport.

11. Méthode de transport d'appareils comprenant les étapes suivantes :
a) placer au moins deux membres (2) selon l'une des revendications 1 à 7 ou le dispositif de transport (1) selon la revendication 8 ou 9 sous les appareils à déplacer à leur emplacement d'origine, de sorte que les rouleaux (7, 8, 9, 10) soient tournés vers le sol et que les appareils transportés reposent sur la surface de transport des membres (2); et
b) déplacer les appareils transportés de leur emplacement d'origine de préférence, les appareils transportés sont choisies du groupe constitué par les machines à laver, les sèche-linge, les fours, les lave-vaisselle et les conteneurs de transport.

12. Dispositif comprenant au moins 2 membres (2) selon l'une des revendications 1 à 7 ou le dispositif de transport (1) selon la revendication 8 ou 9 ou avec des zones de réception pour les membres (2) selon l'une des revendications 1 à 7 ou pour le dispositif de transport (1) selon la revendication 8 ou 9, où les zones de réception (18, 18', 19, 19') sont conçues de telle sorte qu'elles forment une liaison fixe avec les membres ou le dispositif de transport (1) et permettant le déplacement de l'appareil sur les rouleaux (7, 8, 9, 10) dans les dispositifs à rouleaux (12, 12') sur le sol, de préférence dans le cas où l'appareil est choisi du groupe constitué par les machines à laver, les sèche-linge, fours, lave-vaisselle et conteneurs de transport.
